# EUROPEAN PATENT APPLICATION

(11) **EP 0 690 088 A2**
(43) Date of publication of application: **03.01.1996**
(21) Application number: 95110095.7
(22) Date of filing: 28.06.1995
(51) Int. Cl.: C08G 77/50, C07F 7/08

(54) **Fluorine-containing organosilicon compounds and method for preparation**

(30) Priority: 29.06.1994 JP 170020/94
(71) Applicant: Dow Corning Toray Silicone Company, Limited, Tokyo 103 (JP)
(72) Inventor: Kobayashi, Hideki, Dow Corning Toray Silicone Co., Nihonbashi-muromachi, Chuo-ku, Tokyo 103 (JP)
(74) Representative: Spott, Gottfried, Dr.

(57) **Abstract**

The present invention relates to novel fluorine-containing organosilicon compounds and to a method for their preparation. These compounds are viscous liquids at room temperature, have a low surface tension, have good oil and water repellency, and have good solvent resistance.

## Description

The present invention relates to novel fluorine-containing organosilicon compounds and to a method for the preparation.

Fluorine-containing organosilicon polymers are known to have low surface tension, excellent water repellent or oil repellent characteristics, and good solvent resistance. Thus, they are often used as a surface improvement agent for various substrates. Several fluorine-containing organosilicon polymers have been disclosed. For example, fluorine-containing polysilethylenesiloxanes are disclosed in JP-A's 4-65430; 4-65431; 4-65432; and 4-65433.

However, these polysilethylenesiloxanes have a tendency to depolymerize by hydrolysis under acid or alkali conditions and therefore their applications are limited. Furthermore, since these fluorine-containing polysilethylenesiloxanes are synthesized by ring-opening polymerization of a silethylenesiloxane having a five-membered ring, the preparation of the above silethylenesiloxanes is extremely difficult.

The present invention provides a fluorine-containing organosilicon compound comprising units of the formula: 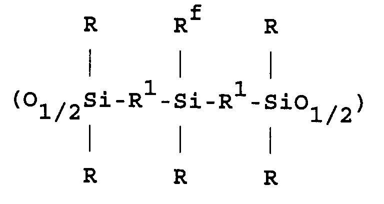
wherein R is a monovalent hydrocarbon group having from 1 to 10 carbon atoms and free of aliphatic unsaturation, R¹ is an alkylene group having from 2 to 10 carbon atoms, Rf is a fluorine-containing monovalent organic group having at least 4 carbon atoms and having at least two groups having the formula -CF₂-, and wherein the degree of polymerization (DP) of the compound is from 2 to 10,000.

The main chain of our fluorine-containing organosilicon compound comprises repeating units having the formula delineated above. R is a monovalent hydrocarbon group having from 1 to 10 carbon atoms and is free of aliphatic unsaturation, for example: alkyl groups such as methyl, ethyl, propyl, butyl, pentyl, hexyl, heptyl, octyl, nonyl, and decyl; aryl groups such as phenyl, tolyl, and xylyl; or an aralkyl group such as benzyl or phenethyl. R is preferably selected from methyl or phenyl.

R¹ is an alkylene group having from 2 to 10 carbon atoms, and its structure can be either straight chain or branched chain. Thus, R¹ is selected from ethylene, methylethylene, ethylethylene, propylethylene, butylethylene, propylene, butylene, 1-methylpropylene, pentylene, hexenylene, heptenylene, octenylene, nonenylene, or decenylene. It is preferred that R¹ is selected from ethylene, propylene, butylene, or hexenylene.

Rf is a fluorine-containing monovalent organic group having at least 4 carbon atoms and having at least two groups having the formula -CF₂-. Its structure can also be branched chain, straight chain, or partially branched straight chain, but it is preferably straight chain. The organic groups suitable as R^{f} include an organic group having its formula selected from -(CH₂)ₓC_{y}F_{(2y+1)}, -(CH₂)ₓO(CH₂)_{z}C_{y}F_{(2y+1)}, -C₆H₄(CH₂)ₓC_{y}F_{(2y+1)}, or -C₆H₄O(CH₂)ₓC_{y}F_{(2y+1)} wherein x and y are integers having a value of at least 2, and z is an integer having a value of zero or greater than zero. It is preferred that R^{f} is selected from -(CH₂)₂C₄F₉ or -(CH₂)₃C₄F₉.

The degree of polymerization of the repeating unit having the above formula is from 2 to 10,000. The molecular structure of the fluorine-containing organosilicon compound of the present invention is straight chain or cyclic. If it is a straight chain compound, the terminal group of the molecular chain is for example, a group having the formula R²R₂SiO_{1/2}-wherein R is as described above, and R² is selected from an alkenyl group having from 2 to 10 carbon atoms, a hydroxyl group, or hydrogen atom; a group having the formula R⁴R^{f}RSi-R¹-R₂SiO_{1/2}- wherein R, R¹, and R^{f} are as described above, and R⁴ is selected from a hydrogen atom or a hydroxyl group; and a group having the formula HO_{1/2}-. The alkenyl groups of R² are selected from vinyl, allyl, butenyl, pentenyl, hexenyl, heptenyl, octenyl, nonenyl, or decenyl.

The fluorine-containing organosilicon compounds of this invention are, for example, compounds comprising units selected from: 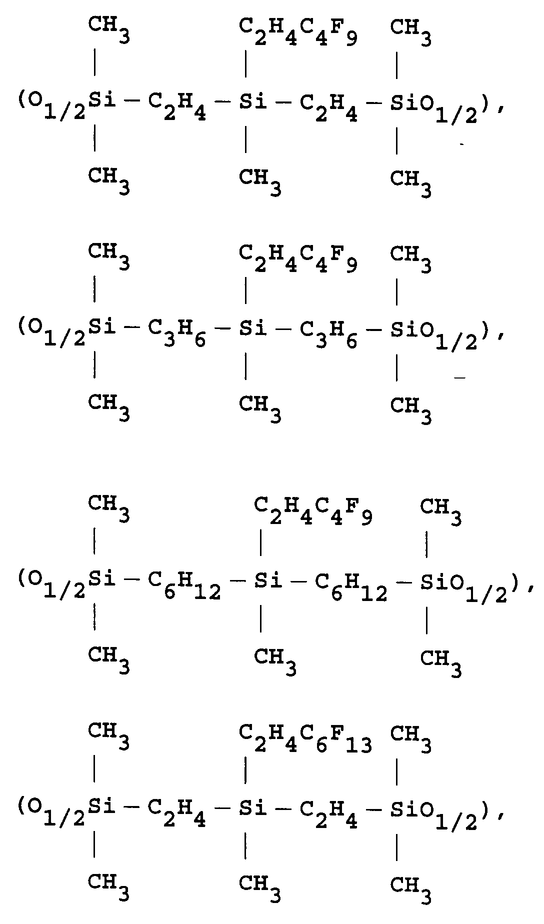 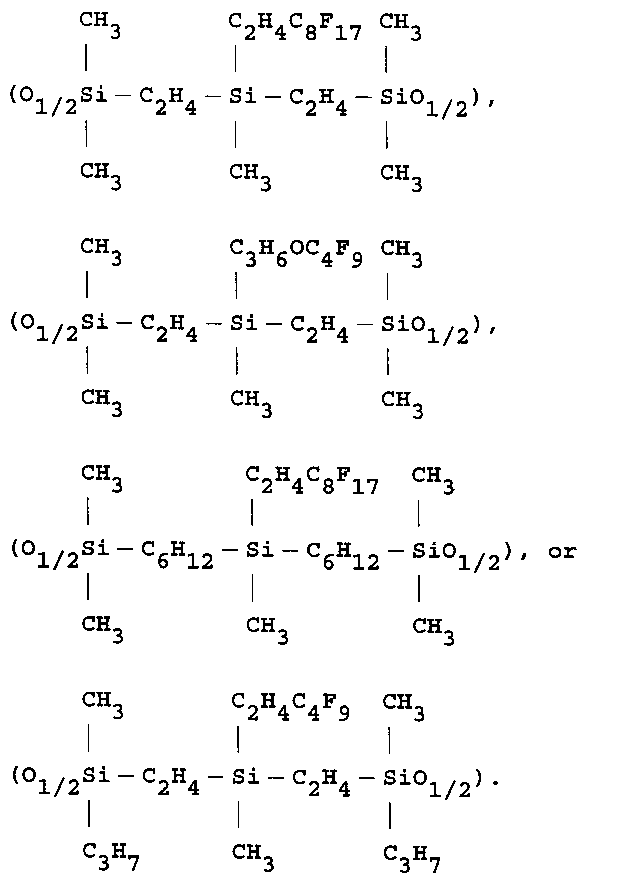
The present invention further relates to a method for the preparation of fluorine-containing organosilicon compounds comprising: (I) reacting: (A) an organodisiloxane having the general formula: R³R₂SiOR₂SiR³ wherein R is a monovalent hydrocarbon group having from 1 to 10 carbon atoms and free of aliphatic unsaturation, and R³ is an alkenyl group having from 2 to 10 carbon atoms; (B) an organohydrogensilane having the general formula:
RfRSiH₂ wherein R is as defined above, and R^{f} is a fluorine-containing monovalent organic group having at least 4 carbon atoms and having at least 2 groups having the formula -CF₂-; in the presence of (C) a catalyst.

In organodisiloxane (A), R is the same as described above for the fluorine-containing organosilicon compounds of our invention including preferred embodiments thereof. The group R³ in (A) is an alkenyl group having from 2 to 10 carbon atoms and is selected from vinyl, allyl, butenyl, pentenyl, hexenyl, or octenyl. The organodisiloxane (A) can be selected from compounds having the formula:

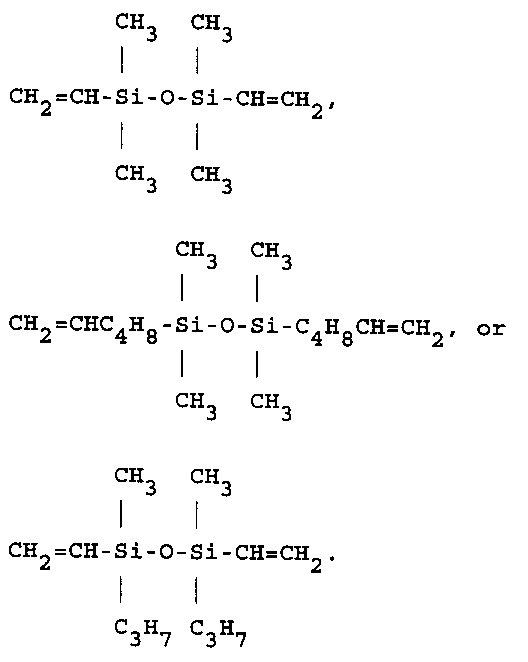

In (B), the organohydrogensilane of this invention, R and R^{f} are as described hereinabove including preferred embodiments thereof.
Organohydrogensilanes suitable as (B) include C₈F₁₇C₂H₄Si(CH₃)H₂ or C₄F₉C₂H₄Si(CH₃)H₂. The amount of addition of (B) is preferably in such an amount that the ratio of the number of moles of (A) to the number of moles of (B) is in the range of 0.5/1.0 to 1.5/1.0. Also, to prepare fluorine-containing organosilicon compounds of relatively high molecular weight, the ratio of the number of moles of (A) to (B) is preferably 1/1.

Component (C) is a catalyst for promoting an addition reaction between the alkenyl groups in (A) and the silicon-bonded hydrogen atoms in (B). Thus (C) is a hydrosilylation reaction catalyst and is, for example, a platinum-containing catalyst, a rhodium-containing catalyst, a palladium-containing catalyst, or an organic peroxide. Platinum-containing catalysts are preferred since they significantly promote the addition reaction. The platinum catalyst can be platinum black, silica fine powder-supported platinum, chloroplatinic acid, an alcohol solution of chloroplatinic acid, a complex of platinum and vinylsiloxane, or a complex of platinum and an olefin. The amount of (C) needed is that amount which induces an addition reaction between components (A) and (B), and preferably the amount in the range of 0.1 - 500 parts by weight per one million parts by weight of the total weight of (A) and (B).

In the method of this invention, the order of addition of components (A)-(C) is not restricted. For example, while a mixture of (A) and (C) is heated and stirred, (B) can be slowly added to this mixture. Also, while a mixture of (A) and (B) is heated and stirred, (C) can be slowly added to this mixture. In addition, a mixture of (A), (B), and (C) can be heated and stirred. Also, in the case where (B) is gaseous, (B) can be introduced into a mixture of (A) and (B).

When (B) is added in excess over (A), the terminal of the molecular chain of our fluorine-containing organosilicon compound is a group having the formula HR^{f}RSi-R¹-R₂SiO_{1/2}- wherein R, R¹, and R^{f} are as defined above including preferred embodiments. Where (A) is added in excess over (B), the terminal of the molecular chain of our fluorine-containing organosilicon compound is a group having the formula R³R₂SiO_{1/2}- wherein R and R³ are as defined above. Also, when active hydrogen-containing compounds such as water and alcohol are mixed in the reaction system, the terminal of the molecular chain of our fluorine-containing organosilicon compound is a group having the formula HORfRSi-R¹-R₂SiO_{1/2}- wherein R, R¹, and R^{f} are as defined above.

By using an organic solvent, our fluorine-containing organosilicon compounds can attain a higher molecular weight. Suitable organic solvents include aromatic hydrocarbon solvents such as toluene or xylene; aliphatic hydrocarbon solvents such as hexane, heptane, octane, or nonane; alicyclic hydrocarbon solvents such as cyclohexane, cycloheptane, or cyclooctane; fluorine-containing aromatic hydrocarbon solvents such as trifluoromethylbenzene, 1,3-bis(trifluoromethyl)benzene, or methylpentafluorobenzene; chlorine-containing hydrocarbon solvents such as chlorobenzene, trichloroethane, trichlorotrifluoroethane, or chloroform; and fluorine-containing solvents such as perfluorooctane.

The reaction conditions of our method are not particularly limited. If the addition reaction is carried out at ambient atmosphere, the reaction temperature is usually from room temperature to the boiling point of (A) or (B), or the boiling point of the organic solvent used. Also, if the boiling point of (B) or the organic solvent used is relatively low, the addition reaction may be conducted under pressure.

Our fluorine-containing organosilicon compound is produced by the method described hereinabove. However, these compounds can also be prepared by hydrolyzing a fluorine-containing organosilicon compound having the general formula: 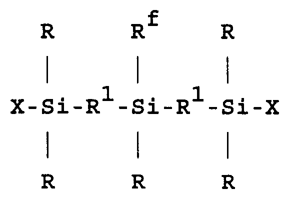
wherein R, R¹, and R^{f} are as defined above, X is selected from a halogen atom or an alkoxy group having from 1 to 10 carbon atoms; by adding an acid or base catalyst to the hydrolyzed product; and by then adding an endcapping agent such an organodisiloxane having the general formula R²R₂SiOR₂SiR² wherein R and R² are as defined above. The acid catalyst is, for example, concentrated sulfuric acid, trifluoromethanesulfonic acid, trifluoroacetic acid, dodecylbenzenesulfonic acid, or acid clay. The base catalyst is, for example, potassium hydroxide, cesium hydroxide, sodium hydroxide, potassium silanolate, cesium silanolate, or sodium silanolate.

The fluorine-containing organosilicon compounds of this invention are viscous liquids at room temperature. Also, their surface tension is low, and the scission of their molecular chains by ionic substances such as acid or alkali does not occur readily. Therefore, they are useful as a base oil for lubricants, base oils for defoaming agents, base oils for greases, and as an additive agent for hydrocarbon based lubricants. Furthermore, they can also be used as the base polymer for organic peroxide-curing silicone rubber compositions, addition reaction-curing silicone rubber compositions, and condensation reaction-curing silicone rubber compositions, where oil resistance, solvent resistance, steam resistance, and transparency are required. Also, where the terminals of the molecular chain contain silicon-bonded hydrogen atoms, it is possible to prepare a fluorine-containing organosilicon compound which has organofunctional groups at the terminals by an addition reaction with an alkene which has organofunctional groups. Where the terminals of the molecular chain contain alkenyl groups, it is possible to prepare fluorine-containing organosilicon compounds which have organofunctional groups at their terminals by an addition reaction with a hydrogensilane which has organofunctional groups.
Where the terminals of the molecular chain contain hydroxyl groups, it is possible to prepare fluorine-containing organosilicon compounds which have organofunctional groups at their terminals by reacting them with a halosilane or a silazane which contains organofunctional groups.

### Example 1

About 9.3 grams (g) (0.05 moles) of 1,3-divinyltetramethyldisiloxane having the formula: 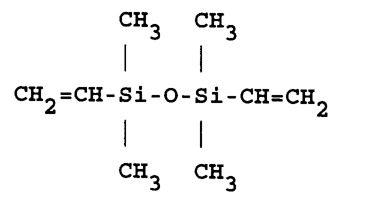
and 20 g of 1,3-bis(trifluoromethyl)benzene were loaded into a reaction vessel. Next, a solution of a complex of platinum and divinyltetramethyldisiloxane was added in an amount such that the content of platinum metal in the entire mixture was 100 ppm, and this mixture was stirred uniformly and heated to 90°C. Then, with stirring, a mixture of 24.6 g (0.05 moles) of 1H,1H,2H,2H-perfluorooctylethylmethylsilane having the formula C₈F₁₇C₂H₄Si(CH₃)H₂ and 15 g of 1,3-bis(trifluoromethyl)benzene was slowly dripped into the mixture at a temperature of 90-115°C. After mixture addition, the resulting mixture was heated to 115°C and stirred for 1 hour. A drop of 1,3-divinyltetramethyldisiloxane was added and stirred for another hour. After stirring, the volatiles were removed by distillation under reduced pressure, and a viscous liquid was obtained. This viscous liquid was analyzed by ¹³C-nuclear magnetic resonance spectral analysis (¹³C-NMR), ²⁹Si-nuclear magnetic resonance spectral analysis (²⁹Si-NMR), and infrared spectroscopy (IR), and it was confirmed to be a fluorine-containing organosilicon compound having the formula: 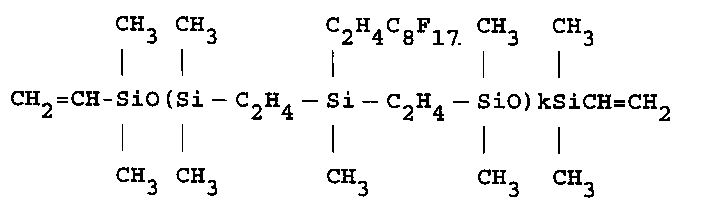
where k is an integer having a value of at least 2.

The fluorine-containing organosilicon compound was analyzed by gel permeation chromatography (GPC), and its weight average molecular weight, calibrated by polydimethylsiloxane, was found to be 7,000. The yield of the fluorine-containing organosilicon compound obtained by the peak area was 92%.

### Example 2

About 14.9 g (0.05 moles) of 1,3-bis(5-hexenyl)tetramethyldisiloxane expressed by the formula: 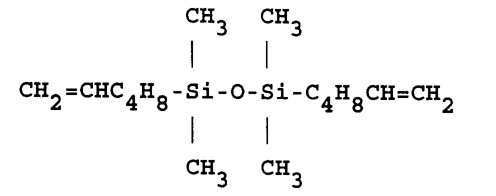
and 20 g of 1,3-bis(trifluoromethyl)benzene were loaded into a reaction vessel. Next, a solution of a complex of platinum and divinyltetramethyldisiloxane was added in such an amount that the content of platinum metal in the entire mixture was 100 ppm, and the mixture was stirred uniformly and heated to 60°C. Then, a mixture of 14.6 g (0.05 moles) of 1H,1H,2H,2H-perfluorobutylethylmethylsilane having the formula C₄F₉C₂H₄Si(CH₃)H₂ and 15 g of 1,3-bis(trifluoromethyl)benzene were dripped slowly in the mixture at a temperature range of 60 to 100°C. After mixture addition, the resulting mixture was heated to 100°C and stirred for 1 hour, and a drop of 1,3-bis(5-hexenyl)tetramethyldisiloxane was added with the mixture being stirred for another hour. After stirring, the volatiles were removed by distillation under reduced pressure, and a viscous liquid was obtained. The viscous liquid was analyzed by ¹³C-NMR, ²⁹Si-NMR, and IR, and it was confirmed to be a fluorine-containing organosilicon compound having the formula: 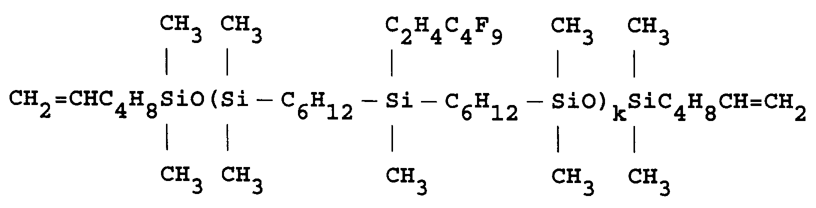
wherein k is an integer having a value of at least 2.

The fluorine-containing organosilicon compound was analyzed by GPC, and its weight average molecular weight calibrated by polydimethylsiloxane, was found to be 5,000. The yield of the fluorine-containing organosilicon compound obtained by the peak area was 90%.

### Example 3

A fluorine-containing organosilicon compound having the formula: 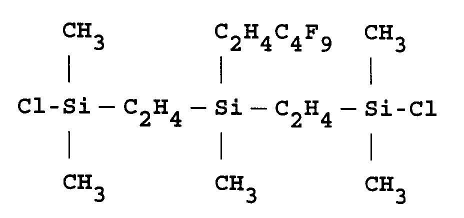
was hydrolyzed in a reaction vessel. A mixture of a straight chain fluorine-containing organosilicon compound having the formula: 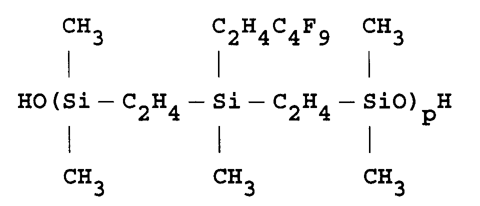
wherein p is an integer having a value of 1-10 and a cyclic fluorine-containing organosilicon compound having the formula: 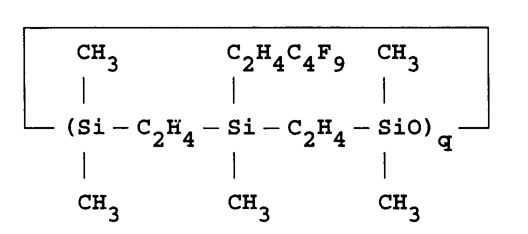
wherein q is an integer having a value of 3 to 10 was obtained. To 20 grams of this mixture were added 22 µl of trifluoromethanesulfonic acid and this mixture was then heated to 70°C and stirred for 7 hours. Then, 100 g of 1,1,2-trichlorotrifluoroethane and 10 g of zinc oxide were added and stirred for 2 hours and filtered. After filtration, methanol was added to the filtrate, the supernatant liquid was separated from the obtained precipitate, and further separated by evaporating the solvent. A viscous liquid was thus obtained. The viscous liquid was analyzed by ¹³C-NMR, ²⁹Si-NMR, and IR, and it was confirmed to be a fluorine-containing organosilicon compound having the formula: 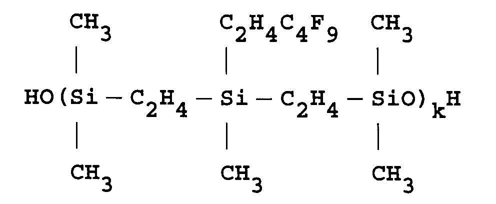
wherein k is an integer having a value of at least 2.

The fluorine-containing organosilicon compound was analyzed by GPC, and its weight average molecular weight calibrated by polydimethylsiloxane was found to be 26,000. Also, its refractive index at 25°C was 1.408.

## Claims

1. A fluorine-containing organosilicon compound comprising units of the formula: 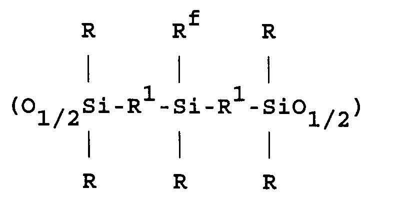 wherein R is a monovalent hydrocarbon group having from 1 to 10 carbon atoms and free of aliphatic unsaturation, R¹ is an alkylene group having from 2 to 10 carbon atoms, R^{f} is a fluorine-containing monovalent organic group having at least 4 carbon atoms and having at least two groups having the formula -CF₂-, and wherein the degree of polymerization of the compound is from 2 to 10,000.

2. A compound according to Claim 1, wherein R is selected from methyl, ethyl, propyl, butyl, pentyl, hexyl, heptyl, octyl, nonyl, decyl, phenyl, tolyl, xylyl, benzyl, or phenethyl.

3. A compound according to Claim 1, wherein R¹ is selected from ethylene, methylethylene, ethylethylene, propylethylene, butylethylene, propylene, butylene, 1-methylpropylene, pentylene, hexenylene, heptenylene, octenylene, nonenylene, or decenylene.

4. A compound according to Claim 1, wherein R^{f} is a group having its formula selected from -(CH₂)ₓC_{y}F_{(2y+1)}, -(CH₂)ₓO(CH₂)_{z}C_{y}F_{(2y+1)}, -C₆H₄(CH₂)ₓC_{y}F_{(2y+1)}, or -C₆H₄O(CH₂)ₓC_{y}F_{(2y+1)} wherein x and y are integers having a value of at least 2, and z is an integer having a value of zero or greater than zero.

5. A compound according to Claim 1, wherein the terminal group of the fluorine-containing organosilicon compound is selected from a group having the formula R²R₂SiO_{1/2}-, a group having the formula R⁴R^{f}RSi-R¹-R₂SiO_{1/2}-, or a group having the formula HO_{1/2}- wherein R and R¹ are as described above, R² is selected from an alkenyl group having from 2 to 10 carbon atoms, a hydroxyl group, or hydrogen atom, R^{f} is as described above, and R⁴ is selected from hydrogen atom or hydroxyl group.

6. A compound according to Claim 5, wherein R² is selected from vinyl, allyl, butenyl, pentenyl, hexenyl, heptenyl, octenyl, nonenyl, or decenyl.

7. A compound according to Claim 1, wherein the fluorine-containing organosilicon compound is selected from compounds comprising units selected from:

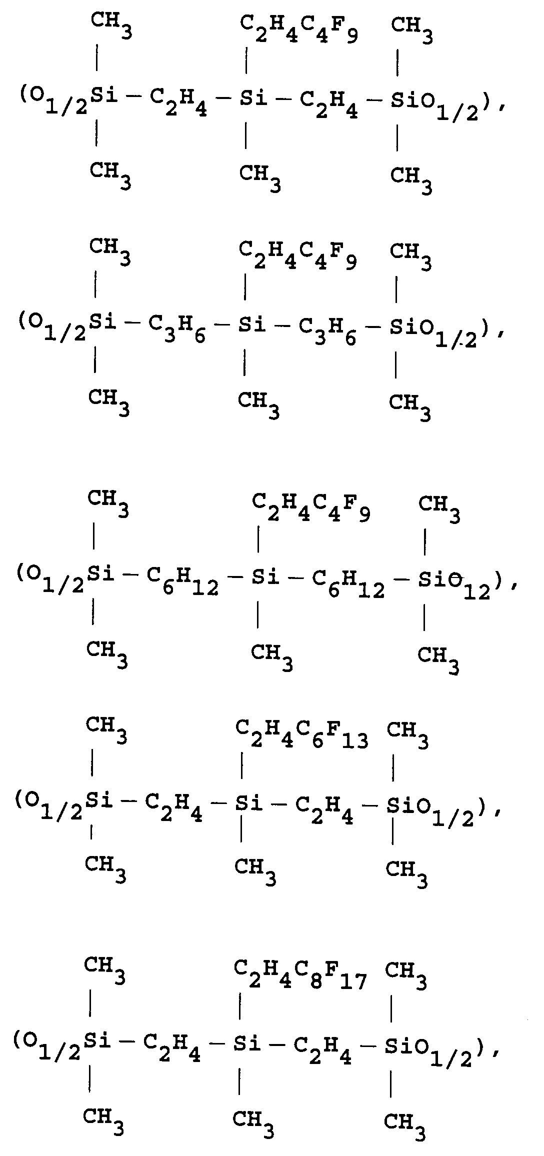

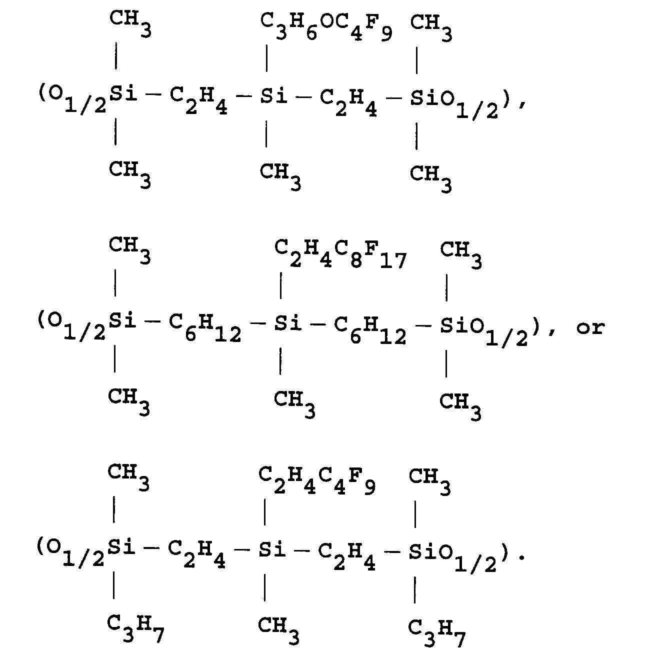

8. A compound according to Claim 5, wherein the fluorine-containing organosilicon compound is selected from: 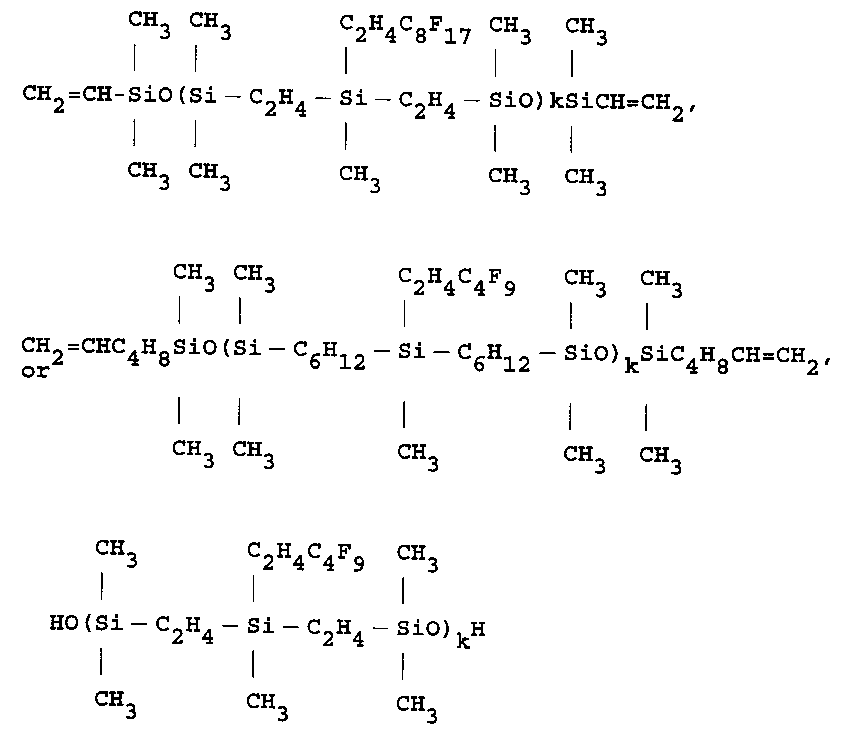 wherein k is an integer having a value of at least 2.

9. A method for the preparation of fluorine-containing organosilicon compounds comprising:
(I) reacting:
(A) an organodisiloxane having the general formula:
R³R₂SiOR₂SiR³
wherein R is a monovalent hydrocarbon group having from 1 to 10 carbon atoms and is free of aliphatic unsaturation, and R³ is an alkenyl group having from 2 to 10 carbon atoms;
(B) an organohydrogensilane having the general formula:
R^{f}RSiH₂
wherein R is as defined above, and R^{f} is a fluorine-containing monovalent organic group having at least 4 carbon atoms and having at least 2 groups having the formula -CF₂- in the presence of
(C) a catalyst selected from platinum-containing catalysts, rhodium-containing catalysts, palladium-containing catalysts, or an organic peroxide.

10. A method according to Claim 9, wherein R³ is selected from vinyl, allyl, butenyl, pentenyl, hexenyl, or octenyl.

11. A method according to Claim 9, wherein (A) is selected from compounds having the formula:

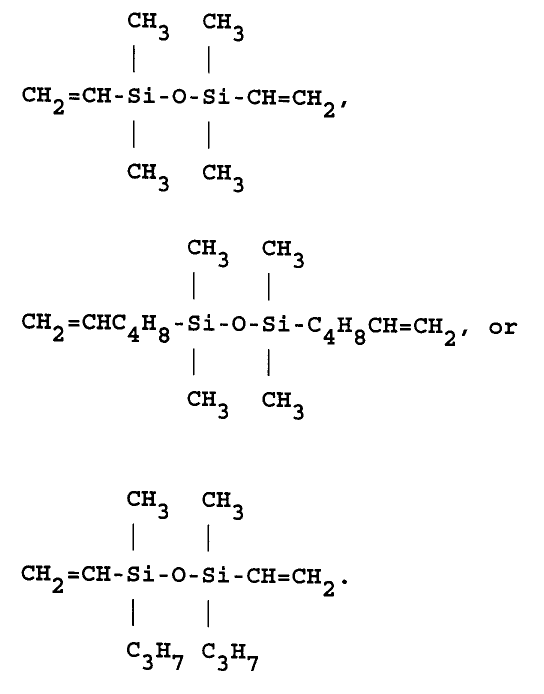

12. A method according to Claim 9, wherein the reaction mixture of (I) further comprises an organic solvent selected from toluene, xylene, hexane, heptane, octane, nonane, cyclohexane, cycloheptane, cyclooctane, trifluoromethylbenzene, 1,3-bis(trifluoromethyl)benzene, methylpentafluorobenzene, chlorobenzene, trichloroethane, trichlorotrifluoroethane, chloroform, or perfluorooctane.

13. A method for the preparation of fluorine-containing organosilicon compounds comprising:
(I) hydrolyzing a fluorine-containing organosilicon compound having the general formula: 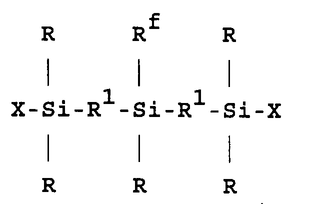 wherein R, R¹, and R^{f} are as defined above, X is selected from a halogen atom or an alkoxy group having from 1 to 10 carbon atoms; (II) adding an acid or base catalyst to the hydrolyzed compound of (I); and
(III) adding an organodisiloxane having the general formula:
R²R₂SiOR₂SiR²
wherein R and R² are as defined above to the mixture of (II).

14. A method according to Claim 13, wherein the acid catalyst is selected from sulfuric acid, trifluoromethanesulfonic acid, trifluoroacetic acid, dodecylbenzenesulfonic acid, or acid clay.

15. A method according to Claim 13, wherein the base catalyst is selected from potassium hydroxide, cesium hydroxide, sodium hydroxide, potassium silanolate, cesium silanolate, or sodium silanolate.
